# EUROPEAN PATENT APPLICATION

(11) **EP 1 563 966 A1**
(43) Date of publication of application: **17.08.2005**
(21) Application number: 05002901.6
(22) Date of filing: 11.02.2005
(51) Int. Cl.: B25J 9/10

(54) **Joint structure with splined motor shaft for industrial robot**

(30) Priority: 13.02.2004 JP 2004036326; 26.04.2004 JP 2004129534
(71) Applicant: FANUC LTD, Minamitsuru-gun, Yamanashi 401-0597 (JP)
(72) Inventor: Nihei, Ryo, Fujiyoshida-shi Yamanashi 403-0005 (JP); Okada, Takeshi Room 10-306, FANUC Manshonharimomi, Yamanashi,401-0511 (JP); Shimada, Naoki Room 12-606, FANUC Manshonharimomi, Minamitsuru-gun Yamanashi 401-0511 (JP)
(74) Representative: Schmidt, Steffen J., Dipl.-Ing.

(57) **Abstract**

An eccentric-rotation type planetary differential reduction gear speed reducer (10) includes a cylindrical housing (14). The cylindrical housing (14) is fixed to a first member (3) constituting a link of a robot, and an output shaft (16) of the speed reducer (10) is fixed to a second member (4) constituting a link of the robot. An eccentric shaft (11) constituting an input shaft of the speed reducer (10) is coupled to a motor shaft (2) of a servo motor mounted on the first member (3). Splines are formed directly on the outer peripheral surface of the motor shaft (2) to form a spline shaft (5). The spline shaft is fitted into a spline hole formed in the eccentric shaft (11), so that the motor shaft (2) is directly coupled to the eccentric shaft (11).

## Description

### BACKGROUND OF THE INVENTION

### 1. Field of the Invention

The present invention relates to a joint structure for an industrial robot and, more particularly, to a joint structure using an eccentric-rotation type planetary differential reduction gear speed reducer.

### 2. Description of the Related Art

A conventional joint structure for an industrial robot requires a large reduction ratio and therefore uses an eccentric-rotation type planetary differential reduction gear speed reducer. This eccentric-rotation type planetary differential reduction gear speed reducer includes an eccentric shaft constituting an input shaft of the speed reducer, external gears mounted on the eccentric shaft through bearings so as to be eccentrically rotatable, an internal gear formed so as to be in inscribed mesh with the external gears, and a means for transmitting only the rotation component of the movement of the external gears to the output shaft of the speed reducer. This eccentric-rotation type planetary differential reduction gear speed reducer is known as a cyclo speed reducer (registered trade mark). In order to transmit the output rotation of a servo motor for providing a joint drive source to this eccentric-rotation type planetary differential reduction gear speed reducer (hereinafter referred to as the speed reducer), several methods are generally employed: for example, a method of forming a key groove on the eccentric shaft of the speed reducer and the motor shaft to couple the motor shaft and the eccentric shaft to each other by means of a key; and a method of forming a spline hole in the eccentric shaft, and fixedly inserting around the motor shaft a spline shaft member having a spline shaft portion to be fitted in the spline hole of the eccentric shaft, which spline shaft is thus fitted in the spline hole so that the motor shaft and the eccentric shaft are coupled to each other through the spline shaft member.

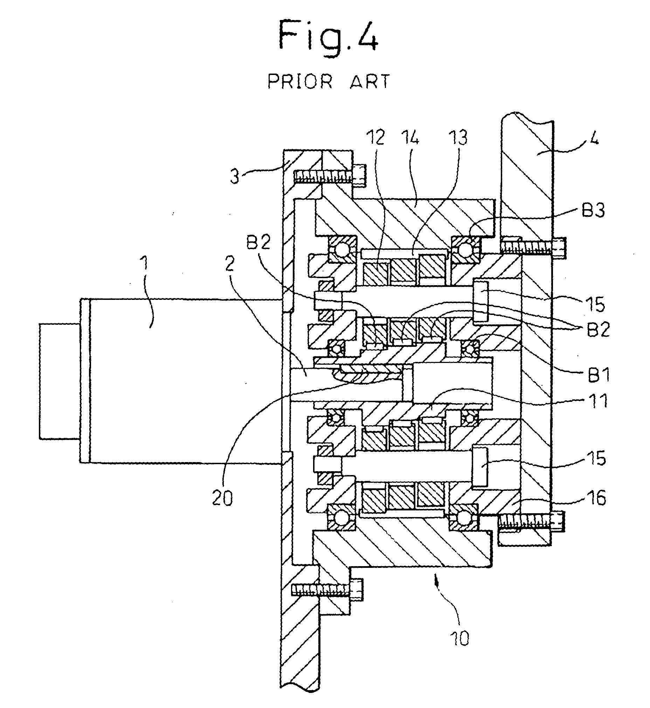

Fig. 4 is a cross-sectional view of a conventional joint structure in which a motor shaft of a servo motor, as described above, and an input shaft of a speed reducer are coupled to each other by means of a key. A first member 3 and a second member 4 constitute link components rotatable relative to each other in a robot joint. A speed reducer (eccentric-rotation type planetary differential reduction gear speed reducer) 10 is provided as a joint between the first member 3 and the second member 4. A cylindrical housing 14 of the speed reducer 10 is fixed to the first member 3, and an output shaft 16 of the reducer 10 is fixed to the second member 4. A rotational axis of the output shaft 16 of the speed reducer 10 corresponds to a rotational axis of this joint. A servo motor 1 for providing a drive source has a motor shaft 2 and is fixed to the first member 3. Both of the motor shaft 2 of the servo motor 1 and an eccentric shaft 11 constituting an input shaft of the speed reducer 10 are formed with key grooves, so that the rotation output of the servo motor 1 is transmitted to the speed reducer 10, using a sunk key 20 adapted to engage with the key grooves.

The eccentric shaft 11 constituting the input shaft is rotatably supported on the output shaft 16 through bearings B1 such as ball bearings. External gears 12 adapted to mesh with an internal gear 13 provided inside the cylindrical housing 14 of the speed reducer 10 are mounted on the eccentric shaft 11 through bearings B2 so as to be eccentrically rotatable. The external gears 12 have roller holes formed therein, into which a pin 15 fixed integrally in the output shaft 16 is loosely fitted.

Upon activation of the servo motor 1, the eccentric shaft 11 of the input shaft of the speed reducer, which is coupled to the motor shaft 2 of the servo motor 1 by means of a key coupling, is rotated along with the motor shaft 2. The external gears 12 mounted on the eccentric shaft 11, while orbiting in mesh with the internal gear 13 of the cylindrical housing 14 of the speed reducer 10, rotate at a rotational speed which is reduced in accordance with a difference in the number of teeth between the external gear 12 and the internal gear 13 and which is lower than the input rotation. The rotation of the external gears 12 is transmitted to the output shaft 16 through the pin 15 thereby to rotate the second member 4 fixed to the output shaft 16. In this way, the output rotation of the servo motor 1 is reduced by the speed reducer 10, and the second member 4 is rotated relatively to the first member 3.

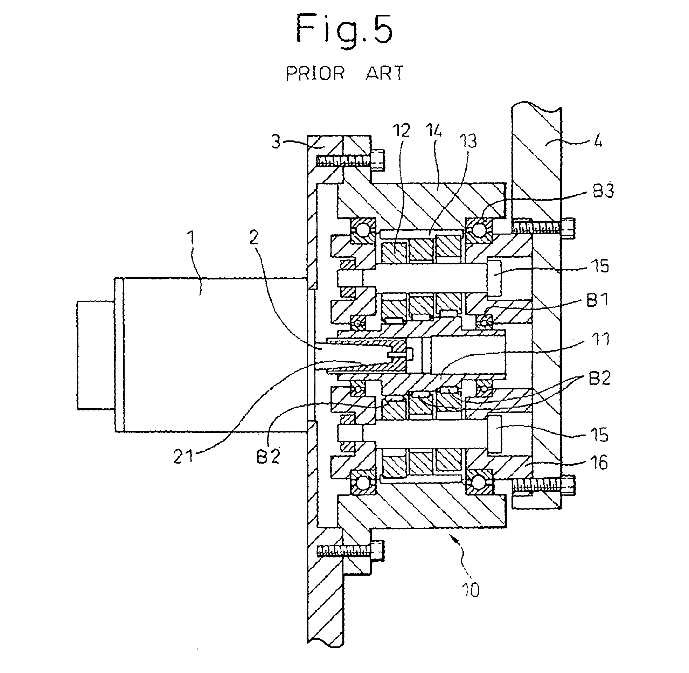

Fig. 5 is a cross-sectional view of a conventional joint structure in which a motor shaft of a servo motor and an input shaft of a speed reducer are coupled to each other by a spline shaft member. A spline shaft member 21 machined to form a spline shaft portion is mounted on a motor shaft 2 of a servo motor 1 by a taper, a bolt or the like. This spline shaft member 21 is fitted in a spline hole formed in an eccentric shaft 11 of the speed reducer, so that the rotation output of the servo motor 1 is transmitted to the speed reducer 10. The other configuration is identical with that of the speed reducer shown in Fig. 4.

Though not limited to the case in which the eccentric-rotation type planetary differential reduction gear speed reducer is used, a robot joint mechanism is also known which employs a spline coupling as a means for coupling a motor shaft and a bevel gear of a transmission mechanism in an primary stage to input the motor output rotation to the speed reducer (Japanese Unexamined Patent Publication No. 6-190769).

Further, as an example of a speed reduction gear for a robot joint, a speed reducer (such as a RV speed reducer (registered trade mark)) is also known which includes a primary speed reduction unit and a secondary speed reduction unit and in which the output shaft of a motor is coupled to a primary speed reduction unit of a parallel axis type gear unit, while the output of the primary speed reduction unit is input to the secondary speed reduction unit, which is constituted by a planetary differential gear unit, to be reduced greatly by the secondary speed reduction unit and then output (Japanese Unexamined Patent Publication No. 8-22516).

In the robot joint mechanism using the eccentric-rotation type planetary differential reduction gear speed reducer, when the motor shaft 2 and the eccentric shaft 11 of the input shaft of the speed reducer are coupled to each other by a key, as shown in Fig. 4, the key grooves must be formed in the motor shaft 2 and the eccentric shaft 11 and therefore a problem that the transmittable torque is limited in terms of strength thereof arises. Also, the continued use may set the key 20 and the key grooves in fatigue, thereby making it difficult to remove the servo motor 1 from the speed reducer 10 in a maintenance or repair operation.

On the other hand, when the motor shaft 2 and the eccentric shaft 11 of the input shaft of the speed reducer are coupled to each other through the spline shaft member 21, the transmittable torque is larger than that for the key coupling. However, as the spline shaft member 21 is fixedly inserted around the motor shaft 2, the diameter of the spline shaft is increased, thereby making it difficult to make a compact apparatus. Also, in some cases of replacing the servo motor 1 in a maintenance or repair operation, additional labor is required to remove the spline shaft member 21 from the demounted servo motor 1 and then mount the spline shaft member 21 on a new servo motor.

Further, in both the key coupling and the spline coupling, the number of parts used and the number of assembly steps are increased, unavoidably resulting in a high cost.

Also, the method, in which the input shaft of the speed reducer and the motor shaft are not directly connected to each other, as in the invention disclosed by Japanese Unexamined Patent Publication No. 6-190769, requires a multiplicity of parts to make up a transmission mechanism, thereby resulting in a problem of an increased cost.

### SUMMARY OF THE INVENTION

Accordingly, an object of the present invention is to obviate the aforementioned problems of the prior art and provide a compact robot joint mechanism for connecting the motor shaft of the joint drive motor directly to the input shaft of the speed reducer using an eccentric-rotation type planetary differential reduction gear speed reducer, wherein a high torque can be transmitted with a small number of parts while at the same time facilitating the assembly process and the motor replacement operation.

According to the present invention, there is provided a joint structure for an industrial robot which includes a first member, a servo motor having a motor shaft, a speed reducer mounted on the first member and having an input shaft and an output member, and a second member coupled to the output member of the speed reducer, the speed reducer being adapted to reduce the rotation of the motor shaft of the servo motor to rotate the first member and the second member relatively to each other, wherein the input shaft of the speed reducer is formed at one end surface thereof with a recess or a through hole extending in an axial direction, and splines are formed both on the inner peripheral surface of the recess or the through hole and directly on the outer peripheral surface of the end portion of the motor shaft of the servo motor, so that, when the end portion of the motor shaft is inserted into the recess or the through hole, the splines of the end portion of the motor shaft can engage with the splines of the recess or the through hole, thereby to directly couple the motor shaft to the input shaft of the speed reducer while at the same time restricting the relative rotation between the motor shaft and the input shaft of the speed reducer.

In the joint structure, the speed reducer is preferably an eccentric-rotation type planetary differential reduction gear speed reducer which includes an eccentric shaft constituting an input shaft of the speed reducer, external gears mounted on the eccentric shaft through bearings so as to be eccentrically rotatable, an internal gear provided so as to be in inscribed mesh with the external gears, and a means for transmitting the rotation component of the movement of the external gears to the output member.

A rotational axis of the motor shaft and a rotational axis of the output member of the speed reducer may be aligned with each other in a line or may be offset from each other.

According to the present invention, the motor shaft is directly coupled to the input shaft of the speed reducer by the splines thereof and, therefore, a high reliability and a high torque transmission can be achieved. Also, as no special parts are required to couple the motor shaft to the input shaft of the speed reducer, the number of parts can be reduced. Further, the servo motor and the speed reducer can be separated from each other very easily during an assembly or during replacement of the motor, thereby facilitating the maintenance and repair. Additionally, the outer diameter of the spline shaft can be reduced to the required minimum, thereby making a compact design possible.

### BRIEF DESCRIPTION OF THE DRAWINGS

The above and other objects, features and advantages of the present invention will be described in more detail below based on the preferred embodiments of the present invention with reference to the accompanying drawings, in which:
Fig. 1 is a cross-sectional view of a robot joint structure having the motor fixed to the first member according to a first embodiment of the present invention;
Fig. 2 is a cross-sectional view of a robot joint structure having the motor fixed to the second member according to a second embodiment of the present invention;
Fig. 3 is a cross-sectional view of a robot joint structure in which a center axis of the eccentric shaft is offset from a center axis of the output shaft of the speed reducer according to a third embodiment of the present invention;
Fig. 4 is a cross-sectional view of the conventional robot joint structure in which the motor shaft is coupled to the input shaft of the speed reducer by means of a key coupling; and
Fig. 5 is a cross-sectional view of the conventional robot joint structure in which the motor shaft is coupled to the input shaft of the speed reducer by means of a spline part.

### DETAILED DESCRIPTION

The embodiments of present invention will be described below with reference to the drawings.

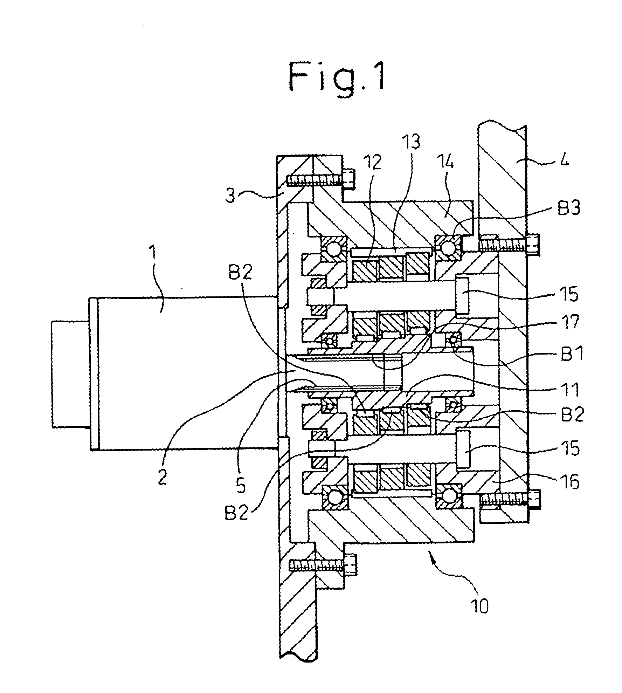

Fig. 1 is a cross-sectional view of a joint structure for an industrial robot according to a first embodiment of the present invention. In this embodiment, a robot joint structure using an eccentric-rotation type planetary differential reduction gear speed reducer (a cyclo speed reducer (registered trade mark)) is illustrated. The speed reducer has the same configuration and the speed reducer and the robot joint parts are coupled to each other in the same way as in the conventional robot joint structure shown in Figs. 4 and 5. The difference lies in the coupling structure between the motor shaft of the servo motor and the input shaft of the speed reducer. In Figs. 1 to 3, the same component elements as those in Figs. 4 and 5 are designated by the same reference numerals, respectively.

As described above, a speed reducer (eccentric-rotation type planetary differential reduction gear speed reducer) 10 is provided between a first member 3 and a second member 4 which constitute a robot joint structure. A cylindrical housing 14 of the speed reducer 10 is fixed to the first member 3, and the output shaft 16 of the speed reducer 10 is fixed to the second member 4. A rotational axis of the output shaft 16 of the speed reducer corresponds to a rotational axis of the joint. A servo motor 1 for providing a drive source has a motor shaft 2 and is fixed to the first member 3. Splines are formed directly on an outer peripheral surface of an end portion of the motor shaft 2 which constitutes an output shaft of the servo motor 1, while corresponding splines adapted to engage with the splines of the motor shaft 2 is formed on an inner peripheral surface of an axially extending through hole formed in an end portion of an eccentric shaft 11 which constitutes an input shaft of the speed reducer 10. when the end portion of the motor shaft 2 is inserted into the through hole of the eccentric shaft 11, the splines of the motor shaft can engage with the splines of the through hole of the eccentric shaft 11, thereby to couple the motor shaft 2 to the eccentric shaft 11 while at the same time restricting the relative rotation between them. The output rotation of the servo motor 1 is reduced by the speed reducer 10 and rotates the second member 4 fixed to the output shaft 16 of the speed reducer 10. The illustrated speed reducer 10 is an eccentric-rotation type planetary differential reduction gear speed reducer having a single-stage speed reduction mechanism.

The eccentric shaft 11 constituting the input shaft of the speed reducer 10 is rotatably supported on the output shaft 16 by bearings B1 such as ball bearings. The eccentric shaft 11 has external gears 12 mounted thereon through bearings B2 such as roller bearings so as to be eccentrically rotatable, and the external gears are adapted to be in mesh with an internal gear 13 provided on the inside of the cylindrical housing 14 of the speed reducer 10. The external gears 12 are formed with roller holes into which a pin 15, fixed integrally with the output shaft 16, is loosely fitted.

Upon activation of the servo motor 1, the eccentric shaft 11 of the input shaft of the speed reducer, which is coupled to the motor shaft 2 of the servo motor 1 by means of a spline coupling, is rotated along with the motor shaft 2. The external gears 12 mounted on the eccentric shaft 11, while orbiting in mesh with the internal gear 13 of the cylindrical housing 14 of the speed reducer, rotate at a rotational speed which is reduced in accordance with a difference between the number of teeth of the external gear 12 and of the internal gear 13 and which is lower than the input rotation. The rotation of the external gears 12 is transmitted to the output shaft 16 through the pin 15 thereby to rotate the second member 4 fixed to the output shaft 16. In this way, the output rotation of the servo motor 1 is reduced by the speed reducer 10, and the second member 4 is rotated relatively to the first member 3.

The configuration described above is identical with that of the prior art shown in Figs. 4 and 5, except that the motor shaft 2 and the eccentric shaft 11 are coupled directly to each other by means of the splines.

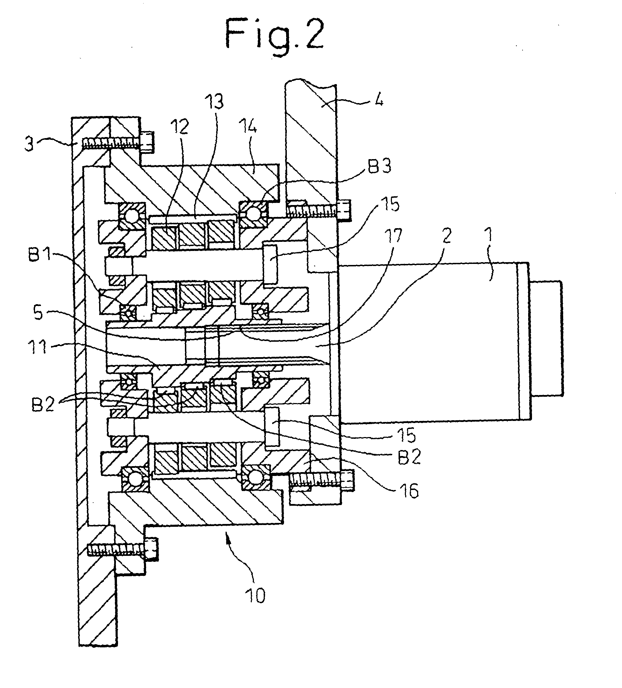

In the embodiment shown in Fig. 1, the motor 1 is fixed to the first member 3. However, the same effect is obtained in the case where the motor 1 is fixed to the second member 4 fixed to the output shaft 16 of the reducer as shown in Fig. 2.

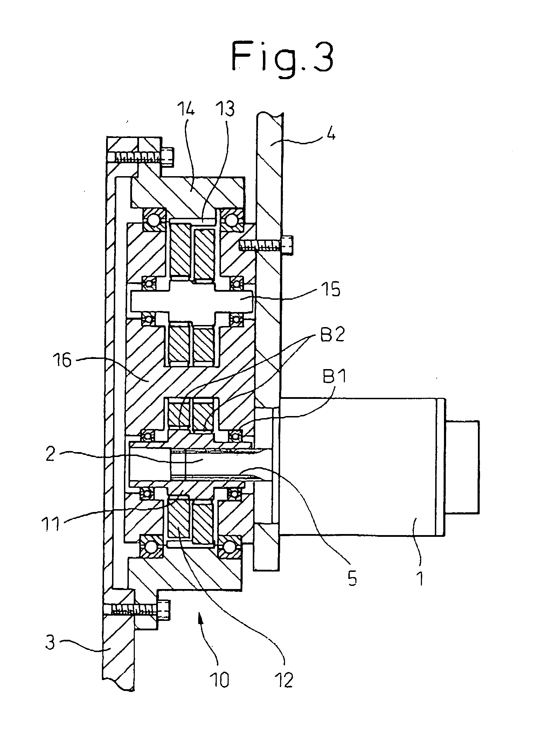

Further, in the embodiment shown in Fig. 1, a center axis of the eccentric shaft 11 is aligned with a center axis of the output shaft 16 of the speed reducer 10. However, as shown in Fig. 3, the center axis of the eccentric shaft may not be aligned with the center axis of the output shaft of the speed reducer. In such an eccentric-rotation type planetary differential reduction gear speed reducer, the center axis of the eccentric shaft is arranged offset from the center axis of the output shaft of the speed reducer, so that the eccentric shaft has a function to transmit the rotation component of the external gear to the output shaft.

The present invention is characterized by a method of coupling the motor shaft of the servo motor to the eccentric shaft constituting the input shaft of the speed reducer in the joint mechanism for the industrial robot. As in the embodiment shown in Fig. 1, the motor shaft 2 is directly machined to form a spline shaft 5 thereon, so that the spline shaft 5 is fitted in the spline hole 17 (i.e. the recess or the through hole formed with the splines on the inner peripheral surface thereof) extending in axial direction thereof from the end surface of the eccentric shaft 11 of the speed reducer 10 to directly couple the motor shaft to the eccentric shaft of the speed reducer 10 without any additional part (such as key, spline shaft member or a coupling).

To provide versatility to a servo motor, the motor shaft thereof generally has a shape like a simple round rod and is not machined in special manner. However, according to the present invention, the motor shaft 2 is machined to have splines thereon to form a spline shaft 5 at the sacrifice of the versatility of the motor. In this way, the motor shaft 2 is coupled to the eccentric shaft 11 of the speed reducer 10 by engaging the spline shaft 5 of the motor shaft 2 with the spline hole 17 formed in the eccentric shaft 11. As a result, the transmission of a high torque is made possible while securing the rigidity of the coupling portion. Further, as no additional member such as the spline shaft member 21, etc. is required unlike in the prior art shown in Fig. 5, the coupling can be achieved by using fewer parts. Also, as the motor shaft 2 is directly coupled to the eccentric shaft 11, the spline diameter can be minimized to make a compact design possible. Furthermore, in coupling the motor shaft 2 to the eccentric shaft 11, the only process required is to insert the spline shaft 5 into the spline hole 17 with the phase of the spline shaft 5 aligned with the phase of the spline hole 17. Also in decoupling the motor shaft 2 from the eccentric shaft 11 to replace the motor, the spline 5 may be simply pulled off from the spline hole 17. Thus, the assembly and disassembly operation can be carried very easily to thereby facilitate maintenance.

While the invention has been described with reference to the specific embodiments shown in the accompanying drawings, these embodiments are only illustrative and not limitative in any sense. Therefore, the scope of the present invention is only limited by the appended claims. The preferred embodiments of the present invention can be modified or changed without departing from the scope of the claims.

## Claims

1. A joint structure for an industrial robot comprising a first member (3; 4), a servo motor (1) having a motor shaft (2), a speed reducer (10) mounted on said first member and having an input shaft (11) and an output member (16), and a second member (4; 3) coupled to said output member (16) of said speed reducer (10), said speed reducer (10) adapted to reduce the rotation of said motor shaft (2) of said servo motor (1) to rotate said first member and said second member relative to each other, said joint structure **characterized in that**:
said input shaft (11) of said speed reducer (10) is formed at one end surface thereof with a recess or a through hole extending in an axial direction, and splines are formed both on the inner peripheral surface of said recess or said through hole and directly on the outer peripheral surface of the end portion of said motor shaft (2) of said servo motor (1), so that, when the end portion of said motor shaft (2) is inserted into said recess or said through hole, said splines of said end portion of said motor shaft (2) can engage with said splines of said recess or said through hole, thereby to directly couple said motor shaft (2) to said input shaft (11) of said speed reducer (10) while at the same time restricting the relative rotation between said motor shaft (2) and said input shaft (11) of said reducer (10).

2. The joint structure according to claim 1, wherein said speed reducer (10) comprises an eccentric-rotation type planetary differential reduction gear speed reducer which includes an eccentric shaft (11) constituting said input shaft of said reducer (10), external gears (12) mounted on said eccentric shaft (11) through bearings (B2) so as to be eccentrically rotatable, an internal gear (13) provided so as to be in inscribed mesh with said external gear (12), and a means (15) for transmitting the rotation component of the movement of said external gears (12) to said output member (16).

3. The joint structure according to claim 1, wherein a rotational axis of said motor shaft (2) is aligned with a rotational axis of said output member (16) of said speed reducer (10) in a line.

4. The joint structure according to claim 1, wherein a rotational axis of said motor shaft (2) is offset from a rotational axis of said output member (16) of said speed reducer (10).
